# EUROPEAN PATENT SPECIFICATION

(11) **EP 3 232 608 B1**
(45) Date of publication and mention of the grant of the patent: **01.01.2020**
(21) Application number: 15867738.5
(22) Date of filing: 30.11.2015
(51) Int. Cl.: H04L 12/24, H04L 29/06, H04L 12/70, G06F 9/00, H04L 29/08, G06F 9/50, H03K 99/00

(54) **CPU PROTECTION METHOD AND APPARATUS IN MULTI-CORE NETWORK DEVICE**
CPU-SCHUTZVERFAHREN UND -VORRICHTUNG IN EINEM MULTICORE-NETZWERKGERÄT
PROCÉDÉ ET APPAREIL DE PROTECTION DE CPU DANS UN DISPOSITIF DE RÉSEAU À PLUSIEURS COEURS

(30) Priority: 11.12.2014 CN 201410764151
(43) Date of publication of application: 18.10.2017
(73) Proprietor: ZTE Corporation, Shenzhen, Guangdong 518057 (CN)
(72) Inventor: SUN, Junhuan, Shenzhen Guangdong 518057 (CN)
(74) Representative: Deambrogi, Edgardo
(86) International application number: PCT/CN2015/095993
(87) International publication number: WO 2016/091093

(56) References cited:
- CA-A1- 2 355 781
- CN-A- 1 852 228
- CN-A- 101 459 605
- CN-A- 101 610 253
- CN-A- 102 299 850
- CN-A- 103 441 946
- US-A1- 2014 025 823
- US-A1- 2014 108 656
- LEE E ET AL: "Efficient scheduling schemes for real-time traffic in wireless networks", GLOBAL TELECOMMUNICATIONS CONFERENCE, 2005. GLOBECOM '05. IEEE ST. LOIUS, MO, USA 28 NOV.-2 DEC. 2005, PISCATAWAY, NJ, USA,IEEE, vol. 6, 28 November 2005 (2005-11-28), pages 3570-3575, XP010881786, DOI: 10.1109/GLOCOM.2005.1578437 ISBN: 978-0-7803-9414-8

## Description

### Technical Field

The disclosure relates to the field of communications, and in particular to a method and device for central processing unit (CPU) protection in a multi-core network device.

### Background

A purpose of CPU protection is to ensure that a network communication device is capable of employing effective polices when attacked by lots of network messages. This purpose is used for protecting that a CPU is capable of working normally and to prevent the network communication device from paralysis due to insufficient CPU resource of the network communication device.

At present, CPU protection policy basically is realized as follows. A CPU utilization rate for each network protocol message is calculated regularly. And, if the CPU utilization rate exceeds a preset threshold, the CPU utilization rate is reduced by certain policy. A protection policy currently employed basically is to drop messages that occupy too many CPU resources, so that the CPU is still capable of working normally when attacked by network messages.

Although this protection policy can realize effective protection for CPU, since the protection policy employs a drop way, while at least one attack message is dropped, lots of normal network messages are also dropped. Especially important messages with special purposes for some customers are dropped. For a multi-core system, a current implementation method will classify each core of the CPU. Each CPU core has respective special purpose, and message processing will occupy one data core independently. When the CPU utilization rate of the data core is too high, CPU protection is started and messages exceeding the threshold are subjected to the drop policy. Obviously, this method will also cause lots of normal network messages to be dropped.

The related document (US 2014/108656 A1) relates to systems and methods wherein such computations are carried out concurrently on multiple machines. However, the above mentioned problem still remains unsolved by the above mentioned document.

### Summary

The scope of protection is defined by the appended claims.

At least some embodiments of disclosure provide a method and device for CPU protection in a multi-core network device, so as to partially solve a problem that user experience is impacted due to lack of enough reasonable protection policies when a CPU utilization rate is too high.

### Brief Description of the Drawings

To better describe the technical scheme in the embodiment of the disclosure or in related art, accompanying drawings needed in the description of the embodiment or related art are simply illustrated below. Obviously, accompanying drawings described hereinafter merely illustrate some embodiments of the disclosure. For the skilled person in the art, other relevant accompanying drawings are obtained according to these accompanying drawings without creative work.
FIG. 1 is a flowchart of a method for CPU protection in a multi-core network device according to an embodiment of the disclosure.
FIG. 2 is a structural block diagram of a device for CPU protection in a multi-core network device according to an embodiment of the disclosure.
FIG. 3 is another structural block diagram of a device for CPU protection in a multi-core network device according to an embodiment of the disclosure.
FIG. 4 is a flowchart of a CPU protection policy selection component performing policy selection in the device according to an embodiment of the disclosure.

### Detailed Description

A clear and complete description as below is provided to the technical scheme in the embodiments of the disclosure in conjunction with the accompanying drawings in the embodiments of the disclosure. Obviously, the embodiments described hereinafter are simply part embodiments of the disclosure, but all the embodiments.

### Embodiment One

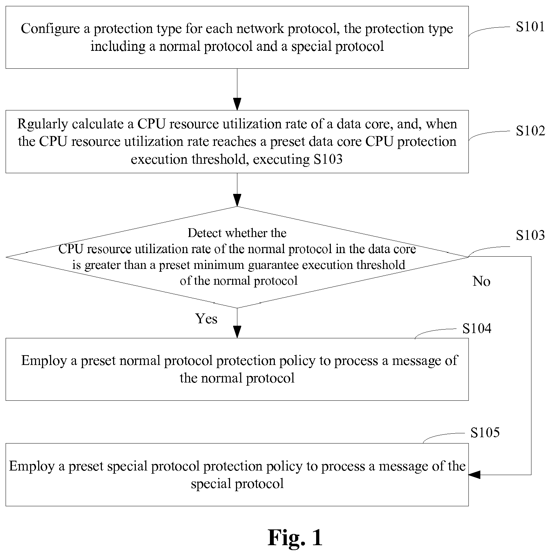

The embodiment of the disclosure provides a method CPU protection in a multi-core network device, as shown in FIG. 1, includes the following steps.

At act S101: a protection type for each network protocol is configured. The protection type includes a normal protocol and a special protocol.

What protection type a network protocol is configured with depends on a degree of importance a user assigns to a protocol message. When a message of certain protocol is an important message, this protocol is configured as a special protocol. When a message of certain protocol is a normal message, this protocol is configured as a normal protocol.

At act S102: a CPU resource utilization rate of a data core is regularly calculated, and, when the CPU resource utilization rate reaches a preset data core CPU protection execution threshold, S103 is executed.

At act S103: the event of whether the CPU resource utilization rate of the normal protocol in the data core is greater than a preset minimum guarantee execution threshold of the normal protocol is detected. When the CPU resource utilization rate of the normal protocol in the data core is greater than the preset minimum guarantee execution threshold of the normal protocol, S104 is executed. When the CPU resource utilization rate of the normal protocol in the data core is not greater than a preset minimum guarantee execution threshold of the normal protocol, S105 is executed.

Herein, the minimum guarantee threshold of the normal protocol is to guarantee that not all normal protocol messages are dropped. If the minimum guarantee threshold of the normal protocol is set too high, a risk for processing the special protocol message is increased. If the minimum guarantee threshold of the normal protocol is set too low, the normal protocol message will have a large sacrifice. The threshold is flexibly set according to user's needs.

At act S104: a preset normal protocol protection policy is employed to process at least one message of the normal protocol.

Herein, the normal protocol protection policy includes but is not limited to: selecting M normal protocols and performing rate limit processing on the M normal protocols. In one embodiment, the selected M normal protocols are former M normal protocols having CPU utilization in the data core from high to low. M is less than or equal to the number of normal protocols.

At act S105: a preset special protocol protection policy is employed to process at least one message of the special protocol.

Herein, the special protocol protection policy includes but is not limited to: selecting N special protocols and transferring the N special protocols to a control core for processing, or, selecting N special protocols and performing rate limit processing on the N special protocols. N is less than or equal to the number of special protocols. In one embodiment, the selected N special protocols are former N special protocols having CPU utilization in the data core from high to low.

Specifically, the special protocol protection policy is selected through the following way: whether a CPU resource utilization rate of the control core is less than or equal to a preset control core CPU protection execution threshold is determined. When the CPU resource utilization rate of the control core is less than or equal to the preset control core CPU protection execution threshold, N special protocols are selected and the at least one message of the selected N special protocols is transferred to the control core for processing. When the CPU resource utilization rate of the control core is greater than the preset control core CPU protection execution threshold, N special protocols are selected and rate limit processing is performed on the at least one message of the selected N special protocols.

Further, the at least some embodiments of the disclosure also include:
when detecting that the CPU resource utilization rate of the data core is lower than the preset data core CPU protection execution threshold, whether the CPU resource utilization rate of the data core is less than or equal to a preset data core CPU protection restoration threshold is determined. When the CPU resource utilization rate of the data core is less than or equal to the preset data core CPU protection restoration threshold, a preset restoration policy is employed to restore each protocol subjected to protection policy processing.

Herein, the act of employing a preset restoration policy to restore each protocol subjected to protection policy processing includes:
Whether a special protocol punishment list is empty is determined. When the special protocol punishment list is not empty, at least one special protocol is selected in the special protocol punishment list and the at least one special protocol is restored. When the special protocol punishment list is empty, whether a normal protocol punishment list is empty is determined. When the normal protocol punishment list is empty, the flow ends. When the normal protocol punishment list is not empty, at least one normal protocol in the normal protocol punishment list is selected and the at least one normal protocol is restored. The special protocol punishment list contains each special protocol subjected to protection policy processing not restored to an original state. And the normal protocol punishment list contains each normal protocol subjected to protection policy processing not restored to an original state.

To sum up, the method of the embodiment of the disclosure sets the minimum guarantee execution threshold of the normal protocol and processes the message of the special protocol when the CPU resource utilization rate of the normal protocol in the data core is lower than the minimum guarantee execution threshold. Moreover, when processing the message of the special protocol, a load balancing manner is preferentially employed. Rate limit processing is not performed on the special protocol, unless the CPU of the data core is still overloaded after the rate limit processing on the normal protocol and the load balancing processing on the special protocol. This method to the maximum extent guarantees that important messages are not dropped, and improves user experience. The adoption of the method of the disclosure can achieve a well protection effect in practical application.

### Embodiment Two

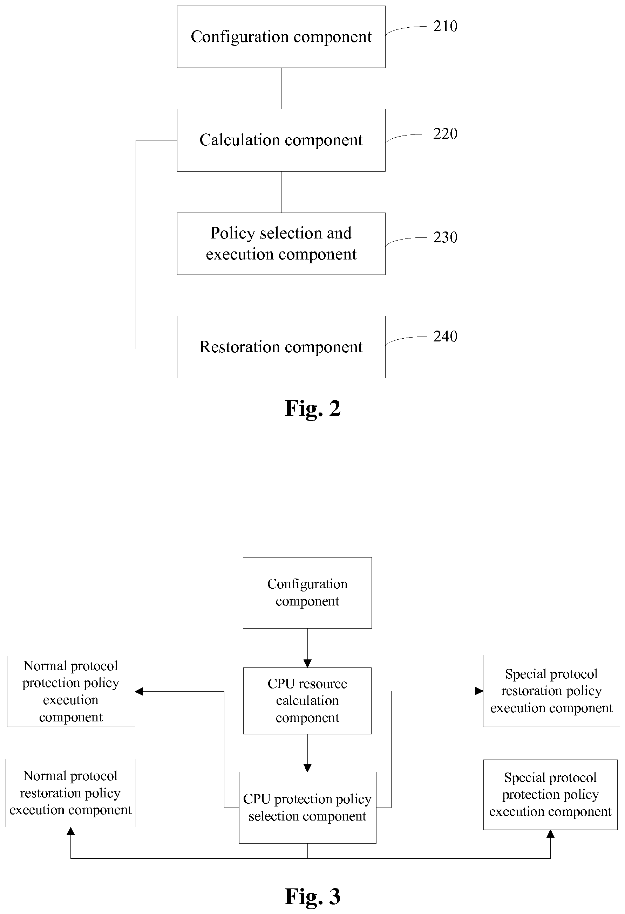

The embodiment of the disclosure provides a device for CPU protection in a multi-core network device, as shown in FIG. 2, including:
a configuration component 210 to configure a protection type for each network protocol, the protection type including a normal protocol and a special protocol;
a calculation component 220 to regularly calculate a CPU resource utilization rate of a data core and trigger a policy selection and execution component when the CPU resource utilization rate reaches a preset data core CPU protection execution threshold;
a policy selection and execution component 230 to detect whether a CPU resource utilization rate of the normal protocol in the data core is greater than a preset minimum guarantee execution threshold of the normal protocol; when the CPU resource utilization rate of the normal protocol in the data core is greater than the preset minimum guarantee execution threshold of the normal protocol, employ a preset normal protocol protection policy to process at least one message of the normal protocol; when the CPU resource utilization rate of the normal protocol in the data core is not greater than a preset minimum guarantee execution threshold of the normal protocol, employ a preset special protocol protection policy to process at least one message of the special protocol.

Herein, the normal protocol protection policy includes but is not limited to: selecting M normal protocols and performing rate limit processing on the M normal protocols. The special protocol protection policy includes but is not limited to: selecting N special protocols and transferring the N special protocols to a control core for processing, or, selecting N special protocols and performing rate limit processing on the N special protocols. M is less than or equal to the number of normal protocols, and N is less than or equal to the number of special protocols.

In specific implementation, the policy selection and execution component 230 is arranged to select the special protocol protection policy through the following way: determine whether a CPU resource utilization rate of the control core is less than or equal to a preset control core CPU protection execution threshold; when the CPU resource utilization rate of the control core is less than or equal to the preset control core CPU protection execution threshold, select N special protocols and transferring the at least one message of the selected N special protocols to the control core for processing; when the CPU resource utilization rate of the control core is greater than the preset control core CPU protection execution threshold, select N special protocols and performing rate limit processing on the at least one message of the selected N special protocols.

Herein, the selected M normal protocols are former M normal protocols having CPU utilization in the data core from high to low; and the selected N special protocols are former N special protocols having CPU utilization in the data core from high to low.

Further, the device of the embodiment further includes: a restoration component 240;
the calculation component 220 is further arranged to trigger the restoration component 240 when detecting that the CPU resource utilization rate of the data core is lower than the preset data core CPU protection execution threshold; and
the restoration component 240 is arranged to determine whether the CPU resource utilization rate of the data core is less than or equal to a preset data core CPU protection restoration threshold; when the CPU resource utilization rate of the data core is less than or equal to the preset data core CPU protection restoration threshold, employ a preset restoration policy to restore each protocol subjected to protection policy processing.

Herein, the act of employing a preset restoration policy to restore each protocol subjected to protection policy processing includes:
Whether a special protocol punishment list is empty is determined. When the special protocol punishment list is not empty, at least one special protocol is selected in the special protocol punishment list and the at least one special protocol is restored. When the special protocol punishment list is empty, whether a normal protocol punishment list is empty is determined. When the normal protocol punishment list is empty, the flow ends. When the normal protocol punishment list is not empty, at least one normal protocol in the normal protocol punishment list is selected and the at least one normal protocol is restored. The special protocol punishment list contains each special protocol subjected to protection policy processing not restored to an original state. And the normal protocol punishment list contains each normal protocol subjected to protection policy processing not restored to an original state.

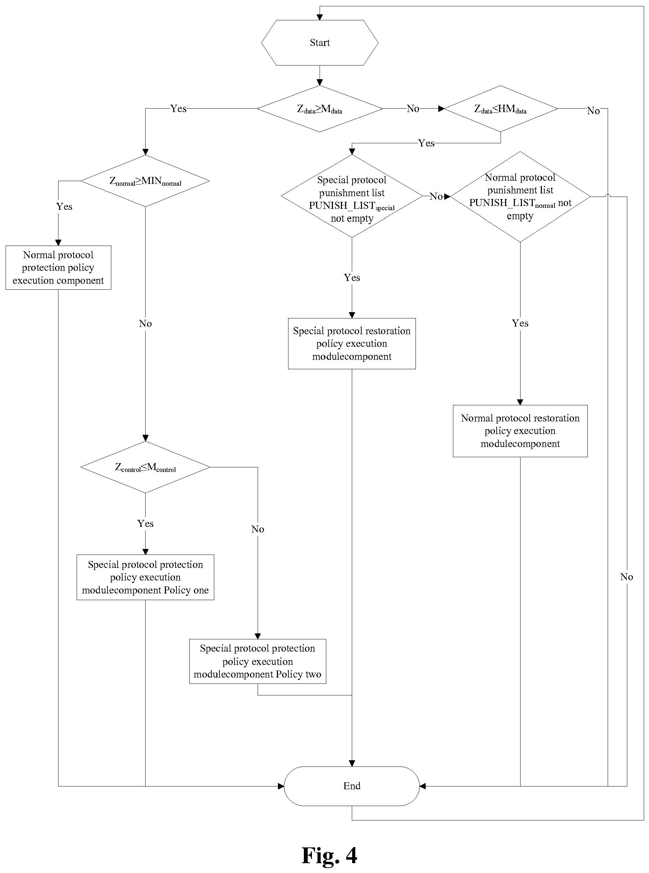

Exemplary embodiments of the disclosure are given below according to FIG. 3 and FIG. 4. And technical details of the embodiments of the disclosure are further given below in conjunction with the description of the embodiment, so that the specific working process of the device provided by the embodiments of the disclosure can be better illustrated.

This embodiment provides a device for CPU protection in a multi-core network device, as shown in FIG. 3, specifically including: a configuration component, a CPU resource calculation component, a CPU protection policy selection component, a normal protocol protection policy execution component, a special protocol protection policy execution component, a normal protocol restoration policy execution component, and a special protocol restoration policy execution component. Through a collaboration of these seven components, protection is realized for the CPU of a multi-core network device. Herein, the CPU protection policy selection component, the normal protocol protection policy execution component and the special protocol protection policy execution component correspond to the policy selection and execution component 230. The normal protocol restoration policy execution component and the special protocol restoration policy execution component correspond to the restoration component 240.

Specifically, in this embodiment:
1. The configuration component performs the following configurations:
   (1) Configuring a protection type for each network protocol: a normal protocol being expressed by Tₙₒᵣₘₐₗ, a special protocol being expressed by T_{special}.
   (2) Configuring a data core CPU protection execution threshold M_{data}.
   (3) Configuring a control core CPU protection execution threshold M_{control}.
   (4) Configuring a minimum guarantee threshold MINₙₒᵣₘₐₗ of the normal protocol.
   (5) Configuring a data core CPU protection restoration threshold HM_{data}.
   (6) Configuring a rate limit ratio factor K1 and a restoration rate ratio factor K4 of the normal protocol.
   (7) Configuring a rate limit ratio factor K2 and a restoration rate ratio factor K3 of the special protocol.

   Herein, ratio factors K1 and K2 are less than 1, while ratio factors K3 and K4 are greater than 1. The specific value of each ratio factor may be flexibly set according to specific requirements. And this embodiment does not limit the values.
2. The CPU resource calculation component performs the following calculations when the timer expires:
   (1) Calculating a CPU resource utilization rate of the data core, and marking as Z_{data}.
   (2) Calculating a CPU resource utilization rate of the normal protocol in the data core, and marking as Zₙₒᵣₘₐₗ.
   (3) Calculating a CPU resource utilization rate of the control core, and marking as Z_{control}.
   (4) Calculating a CPU resource utilization rate of each normal protocol in the data core.
   (5) Calculating a CPU resource utilization rate of each special protocol in the control core.
3. The CPU protection policy selection component performs the following policy selection according to the calculation result of the CPU resource calculation component when each timer expires, as shown in FIG. 4, including:
   (1) The values of Z_{data} and M_{data} are compared. When Z_{data} is greater than or equal to M_{data}, it is indicated that protocol protection needs to be started, and then Step (2) is executed. When Z_{data} is less than M_{data}, Step (4) is executed.
   (2) The values of Zₙₒᵣₘₐₗ and MINₙₒᵣₘₐₗ are compared. And when Zₙₒᵣₘₐₗ is greater than or equal to MINₙₒᵣₘₐₗ, the normal protocol protection policy execution component is entered to execute corresponding protection actions for the normal protocol, and then Step (7) is executed. When Zₙₒᵣₘₐₗ is less than MINₙₒᵣₘₐₗ, Step (3) is executed.
   (3) The values of Z_{control} and M_{control} are compared. When Z_{control} is less than or equal to M_{control}, the special protocol policy execution component is called to execute a Policy 1, and then Step (7) is executed. When Z_{control} is greater than M_{control}, the special protocol execution component is called to execute a Policy 2, then Step (7) is executed.
   (4) The values of Z_{data} and HM_{data} are compared. When Z_{data} is less than or equal to HM_{data}, it is indicated that protocol restoration is needed, Step (5) is executed. When Z_{data} is greater than HM_{data}, Step (7) is executed.
   (5) Whether a special protocol punishment list PUNISH_LIST_{special} is empty is determined. If not empty, after executing the special protocol restoration policy execution component, Step (7) is executed. If empty, Step (6) is executed.
   (6) Whether a normal protocol punishment list PUNISH_LISTₙₒᵣₘₐₗ is empty is determined. If not empty, after executing the normal protocol restoration policy execution component, Step (7) is executed. If empty, Step (7) is directly executed.
   (7) Ending, and, when a next timer expires, Step (1) is repeatedly executed after acquiring the calculation result of the CPU resource calculation component.
4. The normal protocol protection policy execution component implements the following processes:
   (1) Selecting top two normal protocols having the highest CPU utilization rate, performing rate limit setting on the selected two normal protocols according to a rate calculated based on the current rate and the ratio factor K1, limit rate=current rate*K1.
   (2) According to the result of the CPU protection policy selection component, determining whether it is needed to continue performing rate limit setting on the normal protocol. When the rate limit setting is needed to continue performing on the normal protocol, Step (1) is repeatedly executed.
5. The special protocol protection policy execution component implements the following processes:
   Policy 1:
      (1) Selecting one special protocol having the highest CPU utilization rate, and transferring the processing of this protocol to the CPU of the control core for processing.
      (2) According to the result of the CPU protection policy selection component, determining whether it is needed to. When the load balancing processing is needed to continue performing on the special protocol, Step (1) is repeatedly executed.
   Policy 2:
      (1) Selecting one special protocol having the highest CPU utilization rate, performing rate limit setting on the protocol according to a rate calculated based on the current rate and the ratio factor K2, limit rate=current rate*K2.
      (2) According to the result of the CPU protection policy selection component, determining whether it is needed to continue performing rate limit setting on the special protocol. When the rate limit setting needed to continue performing on the special protocol, Step (1) is repeatedly executed.
6. The normal protocol restoration policy execution component implements the following processes:
   (1) Selecting one protocol from the normal protocol punishment list, and calculating a restoration rate according to the arithmetic product of the current rate and the ratio factor K3, restoration rate=current rate of the selected normal protocol*K3.
   (2) According to the result of the CPU protection policy selection component, determining whether it is needed to perform restoration processing on the normal protocol. When the restoration processing is needed to perform on the normal protocol, Step (1) is repeatedly executed, until there is no punishment protocol in the normal protocol punishment list.

   Herein, the normal protocol punishment list contains each normal protocol subjected to normal protocol protection policy processing not completely restored to the original state.
7. The special protocol restoration policy execution component implements the following processes:
   (1) Selecting one protocol from the special protocol punishment list, and determining the punishment type for this protocol.
   (2) If the punishment policy of the Policy 1 is employed, restoring the protocol to the CPU of the data core for processing.
   (3) If the punishment policy of the Policy 2 is employed, calculating a restoration rate according to the arithmetic product of the current rate and the ratio factor K4, restoration rate=current rate of the selected special protocol*K4.
   (4) According to the result of the CPU protection policy selection component, determining whether it is needed to continue performing restoration processing on the special protocol. When the restoration processing is needed to continue performing on the special protocol, Steps (1), (2) and (3) are repeatedly executed, until there is no punishment protocol in the special protocol punishment list.

Herein, the special protocol punishment list contains each special protocol subjected to special protocol protection policy processing not completely restored to the original state.

To sum up, the device of the disclosure sets the minimum guarantee execution threshold of the normal protocol and processes the message of the special protocol when the CPU resource utilization rate of the normal protocol in the data core is lower than the minimum guarantee execution threshold. Moreover, when processing the message of the special protocol, a load balancing manner is preferentially employed. Rate limit processing is not performed on the special protocol, unless the CPU of the data core is still overloaded after the rate limit processing on the normal protocol and the load balancing processing on the special protocol. This device to the maximum extent guarantees that important messages are not dropped, and improves user experience. The adoption of the device of the disclosure can achieve a well protection effect in practical application.

### Industrial Applicability

The at least some embodiments of the disclosure process the message of the normal protocol preferentially in a case where the CPU utilization rate is too high, thereby to the maximum extent guaranteeing that important messages are not dropped and improving the user experience in the circumstance of guaranteeing a well protection effect on the CPU.

## Claims

1. A method for central processing unit, CPU, protection in a multi-core network device, comprising:
configuring (S101) a protection type for each network protocol, wherein the protection type comprises a normal protocol and a special protocol; and
regularly calculating (S102) a global CPU resource utilization rate of a data core, and, when the global CPU resource utilization rate of the data core reaches a preset data core CPU protection execution threshold, detecting (S103) whether a global CPU resource utilization rate of the group of the normal protocols in the data core is greater than a preset minimum guarantee execution threshold of the group of the normal protocols; when the global CPU resource utilization rate of the group of the normal protocols in the data core is greater than the preset minimum guarantee execution threshold of the group of the normal protocols, employing (S104) a preset normal protocol protection policy to process at least one message of the group of the normal protocols; when the global CPU resource utilization rate of the group of the normal protocols in the data core is not greater than a preset minimum guarantee execution threshold of the group of the normal protocols, employing (S105) a preset special protocol protection policy to process at least one message of the group of the special protocols;
wherein the normal protocol protection policy comprises: selecting M normal protocols from the group of the normal protocols and performing rate limit processing on the M normal protocols; and
the special protocol protection policy comprises: selecting N special protocols from the group of the special protocols and transferring the N special protocols to a control core for processing, or, selecting N special protocols from the group of the special protocols and performing rate limit processing on the N special protocols, wherein M is less than or equal to the number of normal protocols in the group of the normal protocols, and N is less than or equal to the number of special protocols in the group of the special protocols.

2. The method as claimed in claim 1, wherein
the M normal protocols are selected from the group of the normal protocols in descending order of CPU utilization in the data core; and
the N special protocols are selected from the group of the special protocols in descending order of CPU utilization in the data core.

3. The method as claimed in claim 1 or 2, wherein employing the preset special protocol protection policy to process the at least one message of the group of the special protocols comprises:
determining whether a CPU resource utilization rate of the control core is less than or equal to a preset control core CPU protection execution threshold; when the CPU resource utilization rate of the control core is less than or equal to the preset control core CPU protection execution threshold, selecting N special protocols from the group of the special protocols and transferring the at least one message of the selected N special protocols to the control core for processing; when the CPU resource utilization rate of the control core is greater than the preset control core CPU protection execution threshold, selecting N special protocols from the group of the special protocols and performing rate limit processing on the at least one message of the selected N special protocols.

4. The method as claimed in claim 1 or 2, wherein the method further comprises:
when detecting that the global CPU resource utilization rate of the data core is lower than the preset data core CPU protection execution threshold, determining whether the global CPU resource utilization rate of the data core is less than or equal to a preset data core CPU protection restoration threshold; when the global CPU resource utilization rate of the data core is less than or equal to the preset data core CPU protection restoration threshold, employing a preset restoration policy to restore each protocol subjected to protection policy processing.

5. The method as claimed in claim 4, wherein employing the preset restoration policy to restore each protocol subjected to protection policy processing comprises:
determining whether a special protocol punishment list is empty; when the special protocol punishment list is not empty, selecting at least one special protocol in the special protocol punishment list and restoring the at least one special protocol; when the special protocol punishment list is empty, determining whether a normal protocol punishment list is empty; when the normal protocol punishment list is empty, ending; when the normal protocol punishment list is not empty, selecting at least one normal protocol in the normal protocol punishment list and restoring the at least one normal protocol, wherein the special protocol punishment list contains each special protocol subjected to protection policy processing not restored to an original state, and the normal protocol punishment list contains each normal protocol subjected to protection policy processing not restored to an original state.

6. A device for central processing unit, CPU, protection in a multi-core network device, comprising:
a configuration component (210) to configure a protection type for each network protocol, wherein the protection type comprises a normal protocol and a special protocol;
a calculation component (220) to regularly calculate a global CPU resource utilization rate of a data core and trigger a policy selection and execution component when the global CPU resource utilization rate of a data core reaches a preset data core CPU protection execution threshold; and
a policy selection and execution component (230) to detect whether a global CPU resource utilization rate of the group of the normal protocols in the data core is greater than a preset minimum guarantee execution threshold of the group of the normal protocols; when the global CPU resource utilization rate of the group of the normal protocols in the data core is greater than the preset minimum guarantee execution threshold of the group of the normal protocols, employ a preset normal protocol protection policy to process at least one message of the group of the normal protocols; when the global CPU resource utilization rate of the group of the normal protocols in the data core is not greater than a preset minimum guarantee execution threshold of the group of the normal protocols, employ a preset special protocol protection policy to process at least one message of the group of the special protocols;
wherein the normal protocol protection policy comprises: selecting M normal protocols from the group of the normal protocols and performing rate limit processing on the M normal protocols; and
the special protocol protection policy comprises: selecting N special protocols from the group of the special protocols and transferring the N special protocols to a control core for processing, or, selecting N special protocols from the group of the special protocols and performing rate limit processing on the N special protocols, wherein M is less than or equal to the number of normal protocols in the group of the normal protocols, and N is less than or equal to the number of special protocols in the group of the special protocols.

7. The device as claimed in claim 6, wherein the policy selection and execution component (230) is configured to when employing the preset special protocol protection policy to process the at least one message of the special protocol, determine whether a CPU resource utilization rate of the control core is less than or equal to a preset control core CPU protection execution threshold; when the CPU resource utilization rate of the control core is less than or equal to the preset control core CPU protection execution threshold, select N special protocols from the group of the special protocols and transferring the at least one message of the selected N special protocols to the control core for processing; when the CPU resource utilization rate of the control core is greater than the preset control core CPU protection execution threshold, select N special protocols from the group of the special protocols and performing rate limit processing on the at least one message of the selected N special protocols.

8. The device as claimed in claim 6 or 7, wherein the device further comprises: a restoration component (240);
the calculation component (220) is further arranged to trigger the restoration component when detecting that the CPU resource utilization rate of the data core is lower than the preset data core CPU protection execution threshold; and
the restoration component (240) is arranged to determine whether the CPU resource utilization rate of the data core is less than or equal to a preset data core CPU protection restoration threshold; when the CPU resource utilization rate of the data core is less than or equal to the preset data core CPU protection restoration threshold, employ a preset restoration policy to restore each protocol subjected to protection policy processing.

## Patentansprüche

1. Verfahren zum Schutz einer Zentraleinheit (Central Processing Unit, CPU) in einer Mehrkern-Netzwerkvorrichtung, umfassend:
Konfigurieren (S101) eines Schutztyps für jedes Netzwerkprotokoll, wobei der Schutztyp ein Normalprotokoll und ein Spezialprotokoll umfasst; und
regelmäßiges Berechnen (S102) einer globalen CPU-Ressourcenauslastungsrate eines Datenkerns und, wenn die globale CPU-Ressourcenauslastungsrate des Datenkerns einen voreingestellten CPU-Schutzausführungsschwellenwert des Datenkerns erreicht, Erkennen (S103), ob eine globale CPU-Ressourcenauslastungsrate der Gruppe der Normalprotokolle im Datenkern größer als ein voreingestellter Mindest-Garantieausführungsschwellenwert der Gruppe der Normalprotokolle ist; wenn die globale CPU-Ressourcenauslastungsrate der Gruppe der Normalprotokolle im Datenkern größer als der voreingestellte Mindest-Garantieausführungsschwellenwert der Gruppe der Normalprotokolle ist, Verwenden (S104) einer voreingestellten Normalprotokoll-Schutzrichtlinie, um mindestens eine Nachricht der Gruppe der Normalprotokolle zu verarbeiten; wenn die globale CPU-Ressourcenauslastungsrate der Gruppe der Normalprotokolle im Datenkern nicht größer als ein voreingestellter Mindest-Garantieausführungsschwellenwert der Gruppe der Normalprotokolle ist, Verwenden (S105) einer voreingestellten Spezialprotokoll-Schutzrichtlinie, um mindestens eine Nachricht der Gruppe der Spezialprotokolle zu verarbeiten;
wobei die Normalprotokoll-Schutzrichtlinie umfasst: Auswählen von M Normalprotokollen aus der Gruppe der Normalprotokolle und Durchführen einer Ratenbegrenzungsverarbeitung an den M Normalprotokollen; und
die Spezialprotokoll-Schutzrichtlinie umfasst: Auswählen von N Spezialprotokollen aus der Gruppe der Spezialprotokolle und Übertragen der N Spezialprotokolle zu einem Steuerkern zum Verarbeiten, oder Auswählen von N Spezialprotokollen aus der Gruppe der Spezialprotokolle und Durchführen einer Ratenbegrenzungsverarbeitung an den N Spezialprotokollen, wobei M kleiner oder gleich der Anzahl der Normalprotokolle in der Gruppe der Normalprotokolle ist und N kleiner oder gleich der Anzahl der Spezialprotokolle in der Gruppe der Spezialprotokolle ist.

2. Verfahren nach Anspruch 1, wobei
die M Normalprotokolle aus der Gruppe der Normalprotokolle in absteigender Reihenfolge der CPU-Auslastung im Datenkern ausgewählt werden; und
die N Spezialprotokolle aus der Gruppe der Spezialprotokolle in absteigender Reihenfolge der CPU-Auslastung im Datenkern ausgewählt werden.

3. Verfahren nach Anspruch 1 oder 2, wobei das Verwenden der voreingestellten Spezialprotokoll-Schutzrichtlinie zur Verarbeitung der mindestens einen Nachricht der Gruppe der Spezialprotokolle umfasst:
Ermitteln, ob eine CPU-Ressourcenauslastungsrate des Steuerkerns kleiner oder gleich einem voreingestellten CPU-Schutzausführungsschwellenwert des Steuerkerns ist; wenn die CPU-Ressourcenauslastungsrate des Steuerkerns kleiner oder gleich dem voreingestellten CPU-Schutzausführungsschwellenwert des Steuerkerns ist, Auswählen von N Spezialprotokollen aus der Gruppe der Spezialprotokolle und Übertragen der mindestens einen Nachricht der ausgewählten N Spezialprotokolle zum Steuerkern zwecks Verarbeitung; wenn die CPU-Ressourcenauslastungsrate des Steuerkerns größer als der voreingestellte CPU-Schutzausführungsschwellenwert des Steuerkerns ist, Auswählen von N Spezialprotokollen aus der Gruppe der Spezialprotokolle und Durchführen einer Ratenbegrenzungsverarbeitung an der mindestens einen Nachricht der ausgewählten N Spezialprotokolle.

4. Verfahren nach Anspruch 1 oder 2, wobei das Verfahren ferner umfasst:
wenn festgestellt wird, dass die globale CPU-Ressourcenauslastungsrate des Datenkerns niedriger als der voreingestellte CPU-Schutzausführungsschwellenwert des Datenkerns ist, Ermitteln, ob die globale CPU-Ressourcenauslastungsrate des Datenkerns kleiner oder gleich einem voreingestellten CPU-Schutzwiederherstellungsschwellenwert des Datenkerns ist; wenn die globale CPU-Ressourcenauslastungsrate des Datenkerns kleiner oder gleich dem voreingestellten CPU-Schutzwiederherstellungsschwellenwert des Datenkerns ist, Verwenden einer voreingestellten Wiederherstellungsrichtlinie, um jedes Protokoll wiederherzustellen, das der Schutzrichtlinienverarbeitung unterzogen wurde.

5. Verfahren nach Anspruch 4, wobei das Verwenden der voreingestellten Wiederherstellungsrichtlinie zur Wiederherstellung jedes Protokolls, das einer Schutzrichtlinienverarbeitung unterzogen wurde, Folgendes umfasst:
Ermitteln, ob eine Spezialprotokoll-Bestrafungsliste leer ist; wenn die Spezialprotokoll-Bestrafungsliste nicht leer ist, Auswählen mindestens eines Spezialprotokolls in der Spezialprotokoll-Bestrafungsliste und Wiederherstellen des mindestens einen Spezialprotokolls; wenn die Spezialprotokoll-Bestrafungsliste leer ist, Ermitteln, ob eine Normalprotokoll-Bestrafungsliste leer ist; wenn die Normalprotokoll-Bestrafungsliste leer ist, Beenden; wenn die Normalprotokoll-Bestrafungsliste nicht leer ist, Auswählen mindestens eines Normalprotokolls in der Normalprotokoll-Bestrafungsliste und Wiederherstellen des mindestens einen Normalprotokolls, wobei die Spezialprotokoll-Bestrafungsliste jedes Spezialprotokoll enthält, das einer Schutzrichtlinienverarbeitung unterzogen wurde, die nicht in einen Ursprungszustand wiederhergestellt wurde, und die Normalprotokoll-Bestrafungsliste jedes Normalprotokoll enthält, das einer Schutzrichtlinienverarbeitung unterzogen wurde, die nicht in einen Ursprungszustand wiederhergestellt wurde.

6. Vorrichtung zum Schutz einer Zentraleinheit (CPU) in einer Mehrkern-Netzwerkvorrichtung, umfassend:
eine Konfigurationskomponente (210) zur Konfiguration eines Schutztyps für jedes Netzwerkprotokoll, wobei der Schutztyp ein Normalprotokoll und ein Spezialprotokoll umfasst;
eine Berechnungskomponente (220) zur regelmäßigen Berechnung einer globalen CPU-Ressourcenauslastungsrate eines Datenkerns und zur Auslösung einer Komponente zur Richtlinienauswahl und -ausführung, wenn die globale CPU-Ressourcenauslastungsrate eines Datenkerns einen voreingestellten CPU-Schutzausführungsschwellenwert für den Datenkern erreicht; und
eine Komponente zur Richtlinienauswahl und -ausführung (230), um zu erkennen, ob eine globale CPU-Ressourcenauslastungsrate der Gruppe der Normalprotokolle im Datenkern größer als ein voreingestellter Mindest-Garantieausführungsschwellenwert der Gruppe der Normalprotokolle ist; wenn die globale CPU-Ressourcenauslastungsrate der Gruppe der Normalprotokolle im Datenkern größer als der voreingestellte Mindest-Garantieausführungsschwellenwert der Gruppe der Normalprotokolle ist, um eine voreingestellten Normalprotokoll-Schutzrichtlinie zu verwenden, um mindestens eine Nachricht der Gruppe der Normalprotokolle zu verarbeiten; wenn die globale CPU-Ressourcenauslastungsrate der Gruppe der Normalprotokolle im Datenkern nicht größer als ein voreingestellter Mindest-Garantieausführungsschwellenwert der Gruppe der Normalprotokolle ist, um eine voreingestellte Spezialprotokoll-Schutzrichtlinie zu verwenden, um mindestens eine Nachricht der Gruppe der Spezialprotokolle zu verarbeiten;
wobei die Normalprotokoll-Schutzrichtlinie umfasst: Auswählen von M Normalprotokollen aus der Gruppe der Normalprotokolle und Durchführen einer Ratenbegrenzungsverarbeitung an den M Normalprotokollen; und
die Spezialprotokoll-Schutzrichtlinie umfasst: Auswählen von N Spezialprotokollen aus der Gruppe der Spezialprotokolle und Übertragen der N Spezialprotokolle zu einem Steuerkern zum Verarbeiten, oder Auswählen von N Spezialprotokollen aus der Gruppe der Spezialprotokolle und Durchführen einer Ratenbegrenzungsverarbeitung an den N Spezialprotokollen, wobei M kleiner oder gleich der Anzahl der Normalprotokolle in der Gruppe der Normalprotokolle ist und N kleiner oder gleich der Anzahl der Spezialprotokolle in der Gruppe der Spezialprotokolle ist.

7. Vorrichtung nach Anspruch 6, wobei die Komponenten zur Richtlinienauswahl und -ausführung (230) eingerichtet ist, um bei Verwendung der voreingestellten Spezialprotokoll-Schutzrichtlinie zur Verarbeitung der mindestens einen Nachricht des Spezialprotokolls zu ermitteln, ob eine CPU-Ressourcenauslastungsrate des Steuerkerns kleiner oder gleich einem voreingestellten CPU-Schutzausführungsschwellenwert des Steuerkerns ist; wenn die CPU-Ressourcenauslastungsrate des Steuerkerns kleiner oder gleich dem voreingestellten CPU-Schutzausführungsschwellenwert des Steuerkerns ist, um N Spezialprotokolle aus der Gruppe der Spezialprotokolle auszuwählen und die mindestens eine Nachricht der ausgewählten N Spezialprotokolle zum Steuerkern zwecks Verarbeitung zu übertragen; wenn die CPU-Ressourcenauslastungsrate des Steuerkerns größer als der voreingestellte CPU-Schutzausführungsschwellenwert des Steuerkerns ist, um N Spezialprotokolle aus der Gruppe der Spezialprotokolle auszuwählen und eine Ratenbegrenzungsverarbeitung an der mindestens einen Nachricht der ausgewählten N Spezialprotokolle durchzuführen.

8. Vorrichtung nach Anspruch 6 oder 7, wobei die Vorrichtung ferner umfasst: eine Wiederherstellungskomponente (240);
die Berechnungskomponente (220) ferner eingerichtet ist, um die Wiederherstellungskomponente auszulösen, wenn erkannt wird, dass die CPU-Ressourcenauslastungsrate des Datenkerns niedriger als der voreingestellte CPU-Schutzschutzausführungsschwellenwert des Datenkerns ist; und
die Wiederherstellungskomponente (240) eingerichtet ist, um zu ermitteln, ob die CPU-Ressourcenauslastungsrate des Datenkerns kleiner oder gleich einem voreingestellten CPU-Schutzwiederherstellungsschwellenwert des Datenkerns ist; wenn die CPU-Ressourcenauslastungsrate des Datenkerns kleiner oder gleich dem voreingestellten CPU-Schutzwiederherstellungsschwellenwert des Datenkerns ist, um eine voreingestellte Wiederherstellungsrichtlinie zu verwenden, um jedes Protokoll wiederherzustellen, das der Schutzrichtlinienverarbeitung unterzogen wurde.

## Revendications

1. Procédé de protection d'unité centrale, CPU, dans un dispositif de réseau à plusieurs cœurs, comprenant :
la configuration (S101) d'un type de protection pour chaque protocole de réseau, dans lequel le type de protection comprend un protocole normal et un protocole spécial ; et
le calcul régulier (S102) du taux d'utilisation global des ressources de la CPU d'un cœur de données et, lorsque le taux d'utilisation global des ressources de la CPU du cœur de données atteint un seuil d'exécution de protection de CPU du cœur de données prédéfini, la détection (S103) pour savoir si un taux d'utilisation global des ressources de la CPU du groupe des protocoles normaux dans le cœur de données est supérieur à un seuil d'exécution de garantie minimum prédéfini du groupe des protocoles normaux ; lorsque le taux d'utilisation global des ressources de la CPU du groupe des protocoles normaux dans le cœur de données est supérieur au seuil d'exécution de garantie minimum prédéfini du groupe des protocoles normaux, l'utilisation (S104) d'une politique de protection de protocole normal prédéfinie pour traiter au moins un message du groupe des protocoles normaux ; lorsque le taux d'utilisation global des ressources de la CPU du groupe des protocoles normaux dans le cœur de données n'est pas supérieur à un seuil d'exécution minimum prédéfini de garantie du groupe des protocoles normaux, l'utilisation (S105) d'une politique de protection de protocole spécial prédéfinie pour traiter au moins un message du groupe des protocoles spéciaux ;
dans lequel la politique de protection de protocole normal comprend : la sélection de M protocoles normaux dans le groupe des protocoles normaux et l'exécution d'un traitement de limite de taux sur les M protocoles normaux ; et
la politique de protection de protocole spécial comprend : la sélection de N protocoles spéciaux dans le groupe des protocoles spéciaux et le transfert des N protocoles spéciaux à un cœur de commande pour le traitement ou la sélection de N protocoles spéciaux dans le groupe des protocoles spéciaux et l'exécution du traitement de limite de taux sur les N protocoles spéciaux, dans lequel M est inférieur ou égal au nombre de protocoles normaux dans le groupe des protocoles normaux et N est inférieur ou égal au nombre de protocoles spéciaux dans le groupe des protocoles spéciaux.

2. Procédé selon la revendication 1, dans lequel
les M protocoles normaux sont sélectionnés dans le groupe des protocoles normaux dans l'ordre décroissant d'utilisation de la CPU dans le cœur de données ; et
les N protocoles spéciaux sont sélectionnés dans le groupe des protocoles spéciaux dans l'ordre décroissant d'utilisation de la CPU dans le cœur de données.

3. Procédé selon la revendication 1 ou 2, dans lequel l'utilisation de la politique de protection de protocole spécial prédéfinie pour traiter le au moins un message du groupe des protocoles spéciaux comprend :
la détermination pour savoir si un taux d'utilisation des ressources de la CPU du cœur de commande est inférieur ou égal à un seuil d'exécution de protection de la CPU du cœur de commande prédéfini ; lorsque le taux d'utilisation des ressources de la CPU du cœur de commande est inférieur ou égal au seuil d'exécution de protection de la CPU du cœur de commande prédéfini, la sélection de N protocoles spéciaux dans le groupe des protocoles spéciaux et le transfert du au moins un message des N protocoles spéciaux sélectionnés vers le cœur de commande pour le traitement ; lorsque le taux d'utilisation des ressources de la CPU du cœur de commande est supérieur au seuil d'exécution de protection de la CPU du cœur de commande prédéfini, la sélection de N protocoles spéciaux dans le groupe des protocoles spéciaux et la réalisation d'un traitement de limite de taux sur le au moins un message des N protocoles spéciaux sélectionnés.

4. Procédé selon la revendication 1 ou 2, dans lequel le procédé comprend en outre :
lors de la détection du fait que le taux d'utilisation global des ressources de la CPU du cœur de données est inférieur au seuil d'exécution de protection de la CPU du cœur de données prédéfini, la détermination pour savoir si le taux d'utilisation global des ressources de la CPU du cœur de données est inférieur ou égal à un seuil de restauration de protection de la CPU du cœur de données prédéfini ; lorsque le taux d'utilisation global des ressources de la CPU du cœur de données est inférieur ou égal au seuil de restauration de la protection de la CPU du cœur de données prédéfini, l'utilisation d'une politique de restauration prédéfinie pour restaurer chaque protocole soumis au traitement de politique de protection.

5. Procédé selon la revendication 4, dans lequel l'utilisation de la politique de restauration prédéfinie pour restaurer chaque protocole soumis au traitement de politique de protection comprend :
la détermination pour savoir si une liste de sanctions de protocole spécial est vide ; lorsque la liste de sanctions de protocole spécial n'est pas vide, la sélection d'au moins un protocole spécial dans la liste de sanctions de protocole spécial et la restauration du au moins un protocole spécial ; lorsque la liste de sanctions de protocole spécial est vide, la détermination pour savoir si une liste de sanctions de protocole normal est vide ; lorsque la liste de sanctions de protocole normal est vide, l'arrêt ; lorsque la liste de sanctions de protocole normal n'est pas vide, la sélection d'au moins un protocole normal dans la liste de sanctions de protocole normal et la restauration du au moins un protocole normal, dans lequel la liste de sanctions de protocole spécial contient chaque protocole spécial soumis à un traitement de politique de protection non restauré à un état d'origine et la liste de sanctions de protocole normal contient chaque protocole normal soumis à un traitement de politique de protection non restauré à un état d'origine.

6. Dispositif de protection d'unité centrale, CPU, dans un dispositif de réseau à plusieurs cœurs, comprenant :
un composant de configuration (210) pour configurer un type de protection pour chaque protocole de réseau, dans lequel le type de protection comprend un protocole normal et un protocole spécial ;
un composant de calcul (220) pour calculer régulièrement un taux d'utilisation global des ressources de la CPU d'un cœur de données et déclencher un composant de sélection et d'exécution de politique lorsque le taux d'utilisation global des ressources de la CPU d'un cœur de données atteint un seuil d'exécution de protection de CPU de cœur de données prédéfini ; et
un composant de sélection et d'exécution de politique (230) pour détecter si un taux d'utilisation global des ressources de la CPU du groupe des protocoles normaux dans le cœur de données est supérieur à un seuil d'exécution de garantie minimum prédéfini du groupe des protocoles normaux ; lorsque le taux d'utilisation global des ressources de la CPU du groupe des protocoles normaux dans le cœur de données est supérieur au seuil d'exécution de garantie minimum prédéfini du groupe des protocoles normaux, utiliser une politique de protection de protocole normal prédéfinie pour traiter au moins un message du groupe des protocoles normaux ; lorsque le taux d'utilisation global des ressources de la CPU du groupe des protocoles normaux dans le cœur de données n'est pas supérieur à un seuil d'exécution de garantie minimum prédéfini du groupe des protocoles normaux, utiliser une politique de protection de protocole spécial prédéfinie pour traiter au moins un message du groupe des protocoles spéciaux ;
dans lequel la politique de protection de protocole normal comprend : la sélection de M protocoles normaux dans le groupe des protocoles normaux et l'exécution d'un traitement de limite de taux sur les M protocoles normaux ; et
la politique de protection de protocole spécial comprend : la sélection de N protocoles spéciaux dans le groupe des protocoles spéciaux et le transfert des N protocoles spéciaux à un cœur de commande pour le traitement ou la sélection de N protocoles spéciaux dans le groupe des protocoles spéciaux et l'exécution du traitement de limite de taux sur les N protocoles spéciaux, dans lequel M est inférieur ou égal au nombre de protocoles normaux dans le groupe des protocoles normaux et N est inférieur ou égal au nombre de protocoles spéciaux dans le groupe des protocoles spéciaux.

7. Dispositif selon la revendication 6, dans lequel le composant de sélection et d'exécution de politique (230) est configuré pour, lors de l'utilisation de la politique de protection de protocole spécial prédéfinie, traiter le au moins un message du protocole spécial, déterminer si un taux d'utilisation des ressources de la CPU du cœur de commande est inférieur ou égal à un seuil d'exécution de protection de la CPU du cœur de commande prédéfini ; lorsque le taux d'utilisation des ressources de la CPU du cœur de commande est inférieur ou égal au seuil d'exécution de protection de la CPU du cœur de commande prédéfini, sélectionner N protocoles spéciaux dans le groupe des protocoles spéciaux et transférer le au moins un message des N protocoles spéciaux sélectionnés vers le cœur de commande pour traitement ; lorsque le taux d'utilisation des ressources de la CPU du cœur de commande est supérieur au seuil d'exécution de protection de la CPU du cœur de commande prédéfini, sélectionner N protocoles spéciaux dans le groupe des protocoles spéciaux et réaliser un traitement de limite de taux sur le au moins un message des N protocoles spéciaux sélectionnés.

8. Dispositif selon la revendication 6 ou 7, dans lequel le dispositif comprend en outre : un composant de restauration (240) ;
le composant de calcul (220) est en outre agencé pour déclencher le composant de restauration lorsqu'il détecte que le taux d'utilisation des ressources de la CPU du cœur de données est inférieur au seuil d'exécution de protection de la CPU du cœur de données prédéfini ; et
le composant de restauration (240) est agencé pour déterminer si le taux d'utilisation des ressources de la CPU du cœur de données est inférieur ou égal à un seuil de restauration de la protection de la CPU du cœur de données prédéfini ; lorsque le taux d'utilisation des ressources de la CPU du cœur de données est inférieur ou égal au seuil de restauration de protection de la CPU du cœur de données prédéfini, utiliser une politique de restauration prédéfinie pour restaurer chaque protocole soumis au traitement de la politique de protection.
